# EUROPÄISCHE PATENTSCHRIFT

(11) **EP 2 312 234 B1**
(45) Veröffentlichungstag und Bekanntmachung des Hinweises auf die Patenterteilung: **16.11.2016**
(21) Anmeldenummer: 10009097.6
(22) Anmeldetag: 02.09.2010
(51) Int. Cl.: F24J 2/07, F24J 2/46, F24J 2/48

(54) **Strahlungsselektive Absorberbeschichtung und Absorberrohr mit strahlungsselektiver Absorberbeschichtung**
Radiation-selective absorber coating and absorber tube with radiation-selective absorber coating
Revêtement d'absorption à rayonnement sélectif et tube d'absorbeur doté d'un revêtement d'absorption à rayonnement sélectif

(30) Priorität: 15.10.2009 DE 102009049471
(43) Veröffentlichungstag der Anmeldung: 20.04.2011
(73) Patentinhaber: Schott Solar AG, 55122 Mainz (DE)
(72) Erfinder: Kuckelkorn, Thomas, Dr., 07743 Jena (DE); Silmy, Kamel, Dr., 59200 Toucoing (FR); Dreyer, Sebastian, Dr., 95643 Tirschenreuth (DE)
(74) Vertreter: Mehler Achler

(56) Entgegenhaltungen:
- EP-A1- 2 253 737
- EP-A2- 2 093 520
- WO-A1-2006/015815
- WO-A1-2009/051595
- US-A1- 2007 281 171

## Beschreibung

Die Erfindung betrifft eine strahlungsselektive Absorberbeschichtung gemäß dem Oberbegriff des Patentanspruchs 1. Die Erfindung bezieht sich auch auf ein Absorberrohr mit einer solchen strahlungsselektiven Beschichtung.

Übliche Absorberbeschichtungen bestehen aus einem auf einem Substrat, insbesondere einem Metallrohr, aufgebrachten, im Infrarot-Bereich reflektierenden Schicht, einer Cermet-Schicht, die über einen hohen Absorptionsgrad im Bereich des Solarspektrums verfügt, und einer auf der Cermet-Schicht aufgebrachten Deckschicht, die als Antireflexionsschicht bezeichnet wird und wegen des hohen Brechungsindex der Cermet-Schicht zur Verringerung der Oberflächenreflexion auf der Cermet-Schicht vorgesehen ist.

Grundsätzliches Bestreben ist es, eine möglichst hohe Energieausbeute zu erzielen. Die Energieausbeute hängt unter anderem von den Koeffizienten des Absorptionsgrads α und des Emissionsgrads ε ab, wobei immer ein hoher Absorptionsgrad (α > 95 %) und ein geringer Emissionsgrad (E < 10 %) der Absorberbeschichtung angestrebt werden. Ferner wird der Wirkungsgrad des Kollektors durch die Temperatur bestimmt, bei der er betrieben wird. Unter diesem Gesichtspunkt ist eine möglichst hohe Temperatur erwünscht. Konträr hierzu nimmt die Haltbarkeit des Schichtsystems der Absorberbeschichtung aber mit steigender Betriebstemperatur aufgrund von Alterungs- und/oder Diffusionsprozessen ab, wodurch beispielsweise die Absorptionseigenschaft der Cermetschicht und die Reflexionseigenschaft der im Infrarot-Bereich reflektierenden Schicht stark nachlassen können.

In Michael Lanxner und Zvi Elgat in SPIE Vol. 1272 Optical Materials Technology for Energy Efficiency and Solar Energy Conversion IX (1990), Seite 240 bis 249 mit dem Titel "Solar selective absorber coating for high service temperatures, produced by plasma sputtering" wird eine auf einem Stahlsubstrat aufgebrachte Absorberbeschichtung mit einer Antireflexionsschicht aus SiO₂ einer Cermetschicht und einer im Infrarot-Bereich reflektierenden Schicht aus Molybdän beschrieben, wobei zwischen der im Infrarot-Bereich reflektierenden Schicht und dem Substrat eine Diffusionsbarriere bestehend aus Al₂O₃ angeordnet ist. Innerhalb eines solchen Schichtsystems existieren Spannungen, die haftungsvermindernd wirken oder zur Zerstörung und Schollenbildung des Schichtsystems führen.

US 2007/0281171 A1 beschreibt einen Schichtenstapel mit niedrigem Emissionsgrad, der eine oder mehrere Absorptionsschichten, Silberschichten und Barriereschichten aufweist.

Aus der DE 10 2004 010 689 B3 ist ein Absorber mit einer strahlungsselektiven Absorberbeschichtung bekannt, die ein Metallsubstrat, eine Diffusionssperrschicht, eine metallische Reflexionsschicht, eine Cermetschicht und eine Antireflexionsschicht aufweist. Die Diffusionssperrschicht ist eine Oxidschicht, die aus oxidierten Komponenten des Metallsubstrats besteht.

Für die im Infrarot-Bereich reflektierenden Schichten wird üblicherweise Molybdän verwendet. Allerdings sind die Reflexionseigenschaften einer Molybdän-Schicht nicht optimal, so dass es wünschenswert ist, besser reflektierende Materialien einzusetzen.

Die Betriebstemperatur bekannter Absorberrohre liegt im Vakuum bei 300 - 400°C. Es wird aus den vorstehenden Gründen grundsätzlich angestrebt, die Betriebstemperatur weiter zu steigern, ohne aber beispielsweise die Absorptionseigenschaften der Cermetschicht und die Reflexionseigenschaften der im Infrarot-Bereich reflektierenden Schicht zu beeinträchtigen.

In C.E. Kennedy, "Review of Mid- to High-Temperature Solar Selective Absorber Materials", Technical Report des National Renewable Energy Laboratory, Ausgabe Juli 2002, sind solche Bestrebungen zusammengefasst. Daraus ist ein Schichtaufbau aus einer ZrOₓN_{y}- oder einer ZrCₓN_{y}-Absorptionsschicht und einer im IR-Bereich reflektierenden Schicht aus Ag oder Al bekannt, der durch Einbringung einer Al₂O₃-Diffusionssperrschicht eine verbesserte Temperaturstabilität an Luft aufweist. Ferner wurde festgestellt, dass die Temperaturstabilität der Infrarot-Reflexionsschicht im Vakuum durch Einbringung einer Diffusionssperrschicht unterhalb dieser Schicht verbessert werden kann. Für diese Barriereschicht werden Cr₂O₃, Al₂O₃ oder SiO₂ als Schichtmaterial vorgeschlagen. Hierdurch wird eine Stabilität der Silber-Reflexionsschicht bis 500°C erhofft.

Das Streben nach haltbareren Schichten bei gleichzeitig verbessertem Absorptions- und Emissionsgrad ist damit aber nicht beendet.

Daher beschreibt DE 10 2006 056 536 A1 eine strahlungsselektive Absorberbeschichtung mit wenigstens zwei Barriereschichten, einer darauf angeordneten im IR-Bereich reflektierenden Schicht, einer über der reflektierenden Schicht angeordneten Absorptionsschicht und mit einer über der Absorptionsschicht angeordneten Antireflexionsschicht, die einen hohen solaren Absorptionsgrad und einen niedrigen thermischen Emissionsgrad aufweisen. Die Haftung dieser Absorberbeschichtung ist zwar ausreichend, aber noch verbesserungswürdig.

Aufgabe der Erfindung ist es in diesem Sinne, eine Absorberbeschichtung, deren einzelne Schichten sehr gut haftend sind, so dass die Absorberbeschichtung in sich stabil ist, bereitzustellen. Aufgabe der Erfindung ist es weiterhin, ein Absorberrohr mit einer derartigen Beschichtung und ein Verfahren zum Betreiben von Parabol-Rinnen-Kollektoren, in denen solche Absorberrohre eingesetzt werden, bereitzustellen.

Diese Aufgaben werden durch die unabhängigen Patentansprüche gelöst, nämlich dadurch, dass die oberhalb der ersten Barriereschicht angeordnete zweite Barriereschicht aus Cermetmaterial aus wenigstens einem Element aus der Gruppe Aluminiumoxid, Siliciumoxid, Nickeloxid, Chromoxid und wenigstens einem Element aus der Gruppe Molybdän, Nickel, Wolfram, Vanadium besteht.

Vorzugsweise besteht die zweite Barriereschicht aus Cermetmaterial aus Aluminiumoxid und Molybdän.
Die Oxide können auch unterstöchiometrisch hergestellt werden. Im Falle von Aluminium und Molybdän entsteht ein AlₓO_{y}/Al/Mo-Cermet, wobei x die Werte 1 bis 2 und y die Werte 2 bis 3 annehmen kann.

Diese Cermetschicht weist bevorzugt eine Dicke von 5 nm bis 200 nm, besonders bevorzugt eine Dicke von 10 nm bis 50 nm auf. Bei größeren Dicken als 200 nm werden die mechanischen Spannungen im Schichtsystem so groß, dass die Schichten oberhalb der haftungsverbessernden Schicht (25) abplatzen bzw. in einem Tapetest unter sehr geringer Kraft abzuziehen sind.
Bei geringeren Dicken als 5 nm ist die Barrierewirkung, d.h. die Funktion der Schicht als Diffusionssperrschicht nicht mehr gegeben.
Die Cermetschicht aus Aluminiumoxid und Molybdän weist bevorzugt einen Molybdän-Füllfaktor von 20 % bis 70 % , besonders bevorzugt von 30 % bis 50 % auf. Bei höherem Füllfaktor als 70% ist der metallische Anteil in der Schicht zu hoch und die Barrierewirkung wird aufgehoben. Bei niedrigerem Füllfaktor als 20 % zeigen sich Probleme bei der Haftung der IR-reflektierenden Schicht auf der Barriereschicht (24b).

Vorzugsweise besitzt die Cermetschicht als zweite Barriereschicht einen konstanten Füllfaktor.

Die Abschirmung der im IR-Bereich reflektierenden Schicht gegenüber dem Substrat durch eine zweischichtige Barriere, bei der die erste Barriereschicht aus einem thermischen Oxid besteht, z.B. Chromoxid und/oder Eisenoxid enthält, aus z.B. Chromeisenoxid besteht, verhindert, ein insbesondere thermisch bedingtes Eindiffundieren des Substratmaterials, insbesondere von Eisen aus dem Stahl-Absorberrohr, in die im IR-Bereich reflektierende Schicht wirksamer und erhöht damit die Langzeittemperaturstabilität der Beschichtung.

Durch die Ausbildung der zweiten Barriereschicht aus dem beschriebenen Cermetmaterial, insbesondere aus Aluminiumoxid und Molybdän wird die Haftung der Barriereschicht gegenüber denen des Standes der Technik deutlich verbessert. Durch die Anordnung wenigstens einer haftungsverbessernden Schicht zwischen der ersten und zweiten Barriereschicht kann die Haftung der Gesamtschicht weiter deutlich verbessert werden.

Diese haftungsverbessernde Schicht zwischen den Barriereschichten weist vorzugsweise Molybdän auf. Vorzugsweise besteht sie aus Molybdän. Diese haftungsverbessernde Schicht hat bevorzugt eine Dicke von 2 nm bis 40 nm, besonders bevorzugt von 5 nm bis 20 nm.

Das Molybdän hat in dieser Position im Schichtenstapel keine optische Funktion. Diese haftungsverbessernde Schicht ist nicht wirksam. Vorzugsweise liegt die Dicke der ersten Barriereschicht der wenigstens zwei Barriereschichten zwischen 20 nm und 100 nm. Bei Dicken kleiner als 20 nm ist, je nach Zusammensetzung der angrenzenden Schicht, die Barrierewirkung nicht zufriedenstellend. Bei Dicken größer als 100 nm treten thermische Spannungen auf, die unter Umständen zu einer Schichtablösung führen könnten.

Zwischen der im IR-Bereich reflektierenden Schicht und der Absorptionsschicht, die vorzugsweise aus Cermetmaterial besteht, wobei die Cermetschicht vorzugsweise als Gradientenschicht ausgebildet ist, kann eine dritte Barriereschicht angeordnet sein, welche vorzugsweise aus einer AlₓO_{y}-Verbindung besteht, wobei x die Werte 1 oder 2 und y die Werte 1, 2 oder 3 annehmen kann. Sie weist vorzugsweise Dicken von 10 nm bis 50 nm auf.

Die Einbettung der im Infrarot-Bereich reflektierenden Schicht zwischen Barriereschichten und die damit verbundene Ausbildung eines Sandwiches hat den Vorteil, dass auch kein Material aus der im Infrarot-Bereich reflektierenden Schicht in die darüber liegende Absorptionsschicht eindiffundieren kann und auf diese Weise die Absorptionseigenschaften der Absorptionsschicht beeinträchtigt. Die weitgehende Unterbindung von Diffusionen innerhalb des Schichtsystems, insbesondere in oder aus der im Infrarot-Bereich reflektierenden Schicht, sowie in die Absorptionsschicht kann somit sichergestellt werden.

Auf diese Weise kann eine hohe Absorption mit α > 95,5% und ein geringer Emissionsgrad mit ε < 9 % bei einer Betriebstemperatur von 400°C im Vakuum erreeicht werden. Diese Eigenschaften bleiben auch nach beschleunigter Alterung bei 590°C über eine Dauer von 3000 Stunden unverändert. Hierdurch lässt sich der Wirkungsgrad eines Kollektors mit einem mit dieser Beschichtung versehenen Absorberrohrs gleich in doppelter Hinsicht verbessern: das verbesserte Selektivitätsverhältnis α/ε > 0,95/0,1 bedeutet eine höhere Ausbeute der Strahlungsenergie, und eine erhöhte Betriebstemperatur ermöglicht eine effizientere Umwandlung in elektrische Energie, wobei erst die lange Lebensdauer einer derartigen Beschichtung das wirtschaftliche Betreiben eines entsprechenden Parabolrinnenkollektors mit derart beschichteten Absorberrohren sicherstellt.

Die hohe Temperaturbeständigkeit der Absorberschichtung erlaubt nämlich die Verwendung preiswerter Wärmeträgermedien. Die hohe Temperaturstabilität der Absorberbeschichtung erlaubt Betriebstemperaturen für die Absorberrohre von > 450°C bis zu 550°C.

Es kann vorteilhafterweise ein Wärmeträgermedium mit einem Siedepunkt < 110°C, insbesondere Wasser, eingesetzt werden. Bei derart hohen Betriebstemperaturen entsteht Wasserdampf, der unmittelbar in Dampfturbinen eingeleitet werden kann. Zusätzliche Wärmetauscher für die Übertragung der Wärme vom bisher verwendeten Öl auf Wasser sind nicht mehr erforderlich, so dass unter diesem Gesichtspunkt Parabol-Rinnen-Kollektoren mit Absorberrohren mit erfindungsgemäßen Absorberbeschichtung sehr wirtschaftlich betrieben werden können.

Ein weiterer Vorteil besteht darin, dass die Strömungsgeschwindigkeit der Wärmeträgerflüssigkeit durch die Absorberrohre abgesenkt werden kann, da eine höhere Betriebstemperatur ohne Nachteile für die Absorberrohrbeschichtung zulässig ist. Auf diese Weise kann Energie zum Betreiben der Pumpen eines Parabolrinnenkollektors eingespart werden.

Die Einbettung der im Infrarot-Bereich reflektierenden Schicht zwischen Barriereschichten hat den weiteren Vorteil, dass für diese Schicht Materialien wie Silber, Kupfer, Platin oder Gold eingesetzt werden können, die zwar leichter diffundieren aber gegenüber Molybdän den entscheidenden Vorteil haben, dass sie im Infrarot-Bereich deutlich besser reflektieren, so dass ein Emissionsgrad ε < 10% erreichbar ist.

Vorzugsweise weist die im IR-Bereich reflektierende Schicht Gold, Silber, Platin oder Kupfer auf oder besteht aus Gold, Silber, Platin oder Kupfer.

Die Dicke der im Infrarot-Bereich reflektierenden Schicht liegt materialabhängig vorzugsweise bei 50 nm bis 250 nm. Innerhalb dieses Dickenbereiches ist eine Schichtdicke von 100 nm bis 150 nm bevorzugt, wenn insbesondere Kupfer oder Silber verwendet wird. Insbesondere bei der Verwendung von Silber können auch Schichtdicken im Bereich von 60 nm bis 150 nm, vorzugsweise 80 nm bis 150 nm bevorzugt sein. Ganz besonders bevorzugt sind 110 nm ± 10 nm. In anderen Fällen kommen auch Schichtdicken von 50 nm bis 100 nm, insbesondere von 50 bis 80 nm in Betracht.

Diese geringen Schichtdicken für die im Infrarot-Bereich reflektierende Schicht sind deshalb möglich, weil die Materialien Gold, Silber, Platin und Kupfer eine deutlich höhere Reflektivität aufweisen und durch die Packung zwischen zwei Barriereschichten nicht in andere Schichten wegdiffundieren können bzw. nicht durch die Eindiffusion störender anderer Elemente in ihren positiven Eigenschaften beeinträchtigt werden.

Der höhere Preis der Edelmetalle Au, Ag und Pt kann durch die deutlich geringere Schichtdicke gegenüber den bekannten Schichtdicken für die im Infrarot-Bereich reflektierende Schicht kompensiert, teilweise sogar überkompensiert werden.

Die Dicke der Absorptionsschicht liegt vorzugsweise bei 60 nm bis 180 nm, bevorzugt bei 80 nm bis 150 nm. Die Absorptionsschicht ist vorzugsweise eine Cermet-Schicht aus Aluminiumoxid mit Molybdän oder aus Zirkonoxid mit Molybdän. Anstelle von einer homogenen Absorptionsschicht können auch mehrere Absorptionsschichten unterschiedlicher Zusammensetzung, insbesondere mit abnehmendem Metallanteil, oder eine graduell veränderliche Absorptionsschicht vorgesehen sein. Vorzugsweise ist diese Cermet-Schicht eine Gradientenschicht, worunter eine Schicht verstanden wird, bei der der Metallanteil innerhalb der Schicht kontinuierlich, in der Praxis auch stufenweise zu- bzw. abnimmt.

Die Schichtdicke der auf der Absorptionsschicht befindlichen Antireflexionsschicht liegt vorzugsweise bei 60 bis 120 nm, bevorzugt bei 70 nm bis 110 nm. Diese Schicht besteht vorzugsweise aus Siliziumoxid oder Aluminiumoxid.

Ein Absorberohr, insbesondere für Parabol-Rinnen-Kollektoren mit einem Rohr aus Stahl, auf dessen Außenseite eine strahlungsselektive Absorberbeschichtung mit mindestens einer im Infrarot-Bereich reflektierenden Schicht, mit mindestens einer über der reflektierenden Schicht angeordneten Absorptionsschicht, insbesondere aus Cermet-Material, und mit einer Antireflexionsschicht, die auf der Absorptionsschicht aufgebracht ist, wobei die im Infrarot-Bereich reflektierende Schicht auf wenigstens zwei Barriereschichten angeordnet ist und die erste Barriereschicht der wenigstens zwei Barriereschichten aus einem thermisch erzeugten Oxid besteht, ist dadurch gekennzeichnet, dass die zweite Barriereschicht der wenigstens zwei Barriereschichten aus Cermetmaterial aus Aluminiumoxid und Molybdän besteht.

Das Absorberrohr weist bevorzugt strahlungsselektive Absorberbeschichtungen in den als für die Absorberbeschichtung bevorzugt geschilderten Ausführungsformen auf.

Vorzugsweise weist die Cermetschicht aus Aluminiumoxid und Molybdän einen Molybdän-Füllfaktor von 20 % bis 70 %, bevorzugt von 30 % bis 50 % auf.

Vorzugsweise ist auf dem Absorberrohr zwischen der ersten und der zweiten Barriereschicht eine haftungsverbessernde Schicht, die Molybdän aufweist, vorzugsweise aus Molybdän besteht, angeordnet.

Mit der erfindungsgemäßen Absorberbeschichtung bzw. dem erfindungsgemäßen Absorberrohr kann ein Verfahren zum Betreiben eines Parabolrinnenkollektors mit Absorberrohren, durch die ein Wärmeträgermedium geleitet wird, durchgeführt werden bei dem Absorberrohre mit einer strahlungsselektiven Absorberbeschichtung verwendet werden, die mindestens eine im Infrarot-Bereich reflektierende Schicht, mindestens eine über der reflektierenden Schicht angeordnete eine Absorptionsschicht, insbesondere aus Cermet-Material, und eine über der Absorptionsschicht angeordnete Antireflexionsschicht aufweist, wobei zwischen dem Absorberrohr und der reflektierenden Schicht wenigstens zwei Barriereschichten angeordnet sind, von denen die dem Absorberohr zugewandte erste Barriereschicht aus einem thermisch erzeugten Oxid und eine oberhalb der ersten Barriereschicht angeordnete zweite Barriereschicht aus Cermetmaterial aus Aluminiumoxid und Molybdän besteht.

Als Wärmeträgerflüssigkeit, die durch die Absorberrohre geleitet wird, können Wärmeträgerflüssigkeiten mit einem Siedepunkt < 110 °C,insbesondere Wasser, eingesetzt werden. Es können aber auch Wärmeträgerflüssigkeiten mit höherem Siedepunkt verwendet werden.

Gemäß einer weiteren Ausführungsform sieht das Verfahren zum Betreiben eines Parabolrinnenkollektors vor, dass die Betriebstemperatur der Absorberrohre auf 450°C bis 550°C, insbesondere auf 480°C bis 520°C eingestellt wird.

Das Verfahren zum Betreiben eines Parabolrinnenkollektors wird bevorzugt mit Absorberrohren betrieben, die strahlungsselektive Absorberbeschichtungen in den als für die Absorberbeschichtungen bevorzugt geschilderten Ausführungsformen aufweisen.

Beispielhafte Ausführungsformen der Erfindung werden nachfolgend anhand der Zeichnungen näher erläutert.

Es zeigen:
- Figur 1: einen Parabol-Rinnen-Kollektor
- Figur 2: einen Schnitt durch ein Absorberrohr gemäß einer Ausführungsform der Erfindung.

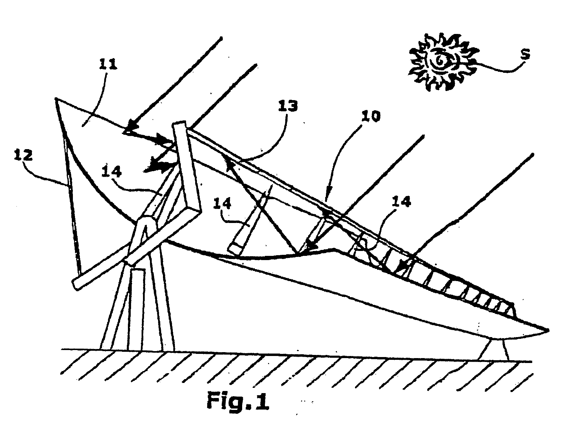

In der Figur 1 ist ein Parabol-Rinnen-Kollektor 10 dargestellt, der einen langgestreckten Parabolreflektor 11 mit einem parabelförmigen Profil aufweist. Der Parabolreflektor 11 wird von einer Tragstruktur 12 gehalten. Längs der Brennlinie des Parabolreflektors 11 erstreckt sich ein Absorberrohr 13, das an Stützen 14 befestigt ist, welches mit dem Parabol-Rinnen-Kollektor verbunden sind. Der Parabolreflektor 11 bildet mit den Stützen 14 und dem Absorberrohr 13 eine Einheit, die um die Achse des Absorberohres 13 geschwenkt und dadurch dem Stand der Sonne S einachsig nachgeführt wird. Die von der Sonne S einfallende parallele Solarstrahlung wird von dem Parabolreflektor 11 auf das Absorberrohr 13 fokussiert. Das Absorberrohr 13 wird von einem Wärmeträgermedium, insbesondere Wasser durchflossen, und durch die absorbierte Solarstrahlung erhitzt. Am Austrittsende des Absorberohres kann das Wärmeübertragungsmedium entnommen und einem Energieverbraucher oder -umwandler-zugeführt werden.

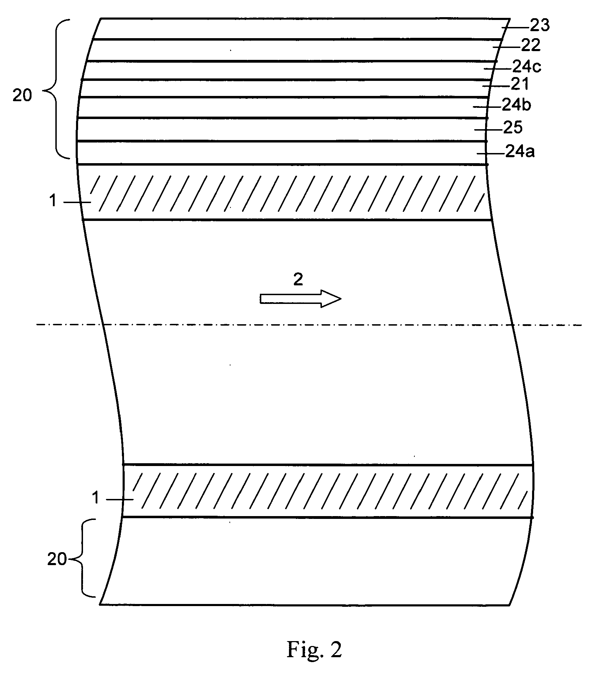

In der Figur 2 ist schematisch ein Schnitt durch ein Absorberrohr 13 dargestellt. Das Absorberrohr 13 weist ein von dem Wärmeträgermedium 2 durchströmtes Stahlrohr 1 auf, das das Substrat für die auf der Außenseite des Rohres 1 aufgebrachte Absorberbeschichtung 20 bildet. Die Schichtdicken der einzelnen Schichten der Absorberbeschichtung 20 sind zur einfachen Veranschaulichung vergrößert und ungefähr gleich dick eingezeichnet.

Die Absorberbeschichtung 20 weist von innen nach außen eine auf dem Stahlrohr 1 mittels thermischer Oxidation aufgebrachte erste Barriere- oder Diffusionssperrschicht 24a aus Chromeisenoxid auf. Darauf ist eine haftungsverbessernde Schicht aus Molybdän aufgebracht. Darauf ist zwischen einer zweiten Barriereschicht 24b aus einem Cermet-material aus Aluminiumoxid und Molybdän und einer dritten Barriereschicht 24c, eine im Infrarot-Bereich reflektierende Schicht 21 aus Gold, Silber, Platin oder Kupfer eingebettet. Auf der dritten Barriereschicht 24c ist eine Cermet-Schicht 22 aufgebracht, und nach außen schließt das Schichtsystem mit einer Antireflexionsschicht 23 ab.

Das Absorberrohr gemäß der Ausführungsform in Figur 2 wird mit dem im Folgenden beschriebenen Verfahren beschichtet.

Das Stahlrohr 1, vorzugsweise ein Edelstahlrohr, wird poliert und anschließend gereinigt. Vorzugsweise wird beim Polieren eine Oberflächenrauheit Rₐ < 0,2 µm erzielt. Anschließend wird das Edelstahlrohr bei einer Temperatur > 400°C etwa eine halbe bis 2 Stunden, insbesondere bei 500°C etwa 1 Stunde thermisch oxidiert. Dabei entsteht eine Oxidschicht von 15 nm bis 50 nm, vorzugsweise von 30 nm ± 10 nm Dicke als erste Barriereschicht 24a.

Anschließend wird das Stahlrohr in eine Vakuumbeschichtungsanlage eingeführt und die Anlage evakuiert. Nach Erreichen eines Druckes von weniger als 5 x 10⁻⁴ mbar, vorzugsweise 1 x 10⁻⁴ mbar werden die nachfolgenden Schichten mittels physikalischer Gasphasenabscheidung (PVD), insbesondere mittels Kathodenzerstäubung (Sputtern) aufgebracht. Dazu wird das Stahlrohr drehend an Sputterquellen, d.h. an aus den Beschichtungssubstanzen, beispielsweise Al, Si, Ag und Mo, bestehenden Targets vorbeigeführt.

Im ersten Abscheidungsschritt wird die haftungsverbessernde Schicht aus Mo aufgebracht, indem das Stahlrohr drehend an dem Target vorbeigeführt wird. Die Schichtdicke beträgt 5 nm bis 20 nm.

Im zweiten Abscheidungsschritt wird die zweite Barriereschicht 24b in Form einer Multischicht aufgebracht, indem das Rohr drehend zwischen gegenüberstehend angeordneten Quellen hindurchgeführt wird. Dabei wird ein Kammerdruck (Argon) zwischen 10⁻² mbar und 10⁻³ mbar, bevorzugt 4 x 10⁻³ mbar bis 7 x 10⁻³ mbar eingestellt. Auf dem Aluminiumtarget wird Sauerstoff hinzugeführt, um Aluminiumoxid zu erzeugen. Die bevorzugte Schichtdicke dieser zweiten Barriereschicht beträgt 10 nm bis 50 nm und ganz besonders bevorzugt 30 nm ± 10 nm. Der Molybdänfüllfaktor beträgt konstant über die Schichtdicke einen Wert zwischen 20 % und 70 %.

Im folgenden dritten Abscheidungsschritt wird die im Infraroten reflektierende Schicht 21 aufgebracht, indem Gold-, Silber-, Platin- oder Kupfer, bevorzugt Silber mit einer Dicke von 60 nm bis 150 nm, besonders bevorzugt von 110 nm ±10 nm auf der zweiten Barriereschicht 24b abgeschieden wird.

Im vierten Abscheidungsschritt wird die dritte Barriereschicht 24c in Form einer weiteren SiOₓ- oder AlₓO_{y}-Schicht aufgebracht, indem Silicium oder Aluminium zerstäubt und reaktiv unter Zuführung von Sauerstoff abgeschieden wird. Die bevorzugte Schichtdicke dieser dritten Barriereschicht beträgt maximal 50 nm, besonders bevorzugt 10 nm ± 5 nm. Diese Barriereschicht kann aber auch völlig entfallen, da sich herausgestellt hat, dass bei geeigneter Zusammensetzung der auf der Reflexionsschicht 21 aufgebrachten Absorptionsschicht 22 eine Diffusion nicht durch eine zusätzliche Barriere gehemmt werden muss.

Im fünften Abscheidungsschritt wird durch gleichzeitige Verdampfung/Zerstäubung von Aluminium und Molybdän aus einem gemeinsamen Tiegel oder von zwei separaten Targets die Absorptionsschicht, also hier die Cermetschicht, 22, aufgebracht. Dabei wird gleichzeitig Sauerstoff in den Zerstäubungsbereich des Aluminiumtargets eingeleitet, um neben Molybdän Aluminiumoxid abzuscheiden.

Dabei kann im fünften Abscheidungsschritt die Zusammensetzung durch entsprechende Wahl der Betriebsparameter (Zerstäubungsraten und Sauerstoffmenge) unterschiedlich eingestellt und im Verlauf der Schichtabscheidung variiert werden. Insbesondere bei Verwendung separater Targets kann so die Abscheidung des Molybdänanteils relativ zur Abscheidung des Aluminiumoxidanteils in der Absorptionsschicht 22 variabel ausgeführt werden. Der Molybdänanteil der Absorptionsschicht 22 ist mit anderen Worten als Gradient ausgeführt, wobei er bevorzugt während des Aufbringens der Absorptionsschicht 22 gesenkt wird. Die Cermetschicht setzt sich somit aus mehreren dünnen Einzelschichten, die in abwechselder Folge aus Aluminiumoxid und Molybdän bestehen, zusammen, wobei die Dicke der Molybdänschichten nach außen abnimmt. Der Molybdänanteil beträgt innen vorzugsweise 25 Vol.-% bis 70 Vol.-%, besonders bevorzugt 40 ± 15 Vol.-%, und nimmt nach außen auf 10 Vol.-% bis 30 Vol.-%, besonders bevorzugt 20 ± 10 Vol.-%, ab. Die Zugabe von Sauerstoff in Relation zum abgeschiedenen Aluminiumanteil erfolgt vorzugsweise unterstöchiometrisch, so dass ein nicht oxidierter Aluminiumanteil in der Absorptionsschicht 22 verbleibt. Dieser steht dann als Redoxpotential oder Sauerstoffgetter zur Verfügung, sodass die Bildung von Molybdänoxid unterbleibt. Der nicht oxidierte Aluminiumanteil in der Absorptionsschicht 22 liegt bevorzugt unter 10 Vol.-%, besonders bevorzugt zwischen 0 und 5 Vol.-%, bezogen auf die Gesamtzusammensetzung der Absorptionsschicht. Der nicht oxidierte Aluminiumanteil kann ebenfalls innerhalb der Absorptionsschicht durch Veränderung der Betriebsparameter Verdampfungsrate und Sauerstoffmenge variiert werden.

Die Absorptionsschicht 22 wird insgesamt vorzugsweise mit einer Dicke von 60 nm bis 180 nm, besonderes bevorzugt mit einer Dicke von 80 nm bis 150 nm, ganz besonders bevorzugt mit 120 ± 30 nm aufgebracht.

Im sechsten Abscheidungsschritt wird die Antireflexionsschicht 23 in Form einer SiO₂-Schicht aufgebracht, indem mittels physikalischer Gasphasenabscheidung von Silizium unter Zuführung von Sauerstoff abgeschieden wird. Die bevorzugte der so abgeschiedenen Antireflexionsschicht 23 beträgt 70 nm bis 110 nm, besonders bevorzugt 90 ± 10 nm.

Ein auf diese Weise erzeugtes Absorberrohr wurde in einer Vakuumheizvorrichtung für 250 h bei 550°C geheizt. Der Druck im Vakuumraum war während dieser Heizdauer kleiner als 1x10⁻⁴ mbar. Nach 250 h wurde die Heizung abgeschaltet. Nach Abkühlen der Probe auf unter 100°C wurde der Vakuumraum belüftet und die Probe entnommen. Die Probe wurde anschließend spektrometrisch vermessen, wobei ein integraler solarer Absorptionsgrad von 95,5% ± 0,5 % für ein Sonnenspektrum AM 1,5 direkt und den Wellenlängenbereich von 350-2500 nm bestimmt werden konnte. Der thermische Emissionsgrad für eine Substrattemperatur von 400°C wurde mit 8% ± 2% ermittelt.

Neben Proben, die nach dem oben beschriebenen Verfahren beschichtet wurden, wurden sowohl Proben, die keine zweite Barriereschicht unterhalb der metallischen Reflektionsschicht (21) aufweisen, als auch Proben, die statt einer erfindungsgemäßen Cermetschicht eine reine Siliziumoxid- oder eine reine Al₂O₃-Schicht als zweite Barriereschicht aufweisen, beschichtet. Nach der Beschichtung wurden Abzugstests mit Klebefilmstreifen ("Tesa-Test") an den Beschichtungen durchgeführt. Bei den Proben ohne zweite Barriereschicht und bei den Proben mit reiner Siliziumoxidschicht als zweiter Barriereschicht wurde ein Ablösung der Beschichtung bei Abzugswerten < 10 N festgestellt. Bei Proben mit reiner Al₂O₃-Schicht konnte eine Haftung bis zu ca. 20 N nachgewiesen werden, jedoch zeigte sich innerhalb von 24 h Rissbildung aufgrund hoher Eigenspannungen der Beschichtung. Bei den Proben, die nach dem oben beschriebenen Verfahren hergestellt wurden, konnten Abzugstests bis 40 N ohne Schichtablösung durchgeführt werden. Diese Versuche wurden nach Alterung der Proben für 10 h bei 590°C mit gleichem Ergebnis wiederholt.

Die erfindungsgemäße Absorptionsbeschichtung weist also neben den sonstigen geforderten Eigenschaften wie hoher solarer Absorptionsgrad und niedriger thermischer Emissionsgrad auch eine gute Haftung der einzelnen Schichten untereinander auf.

Insbesondere die Haftung der Barriereschichten ist gegenüber dem Stand der Technik deutlich verbessert.

### Bezugszeichenliste

- 1: Stahlrohr
- 2: Wärmeträgerflüssigkeit
- 10: Parabol-Rinnen-Kollektor
- 11: Parabolreflektor
- 12: Tragstruktur
- 13: Absorberrohr
- 14: Stütze
- 20: strahlungsselektive Absorberbeschichtung
- 21: im Infrarot-Bereich reflektierende Schicht
- 22: Absorptions-Schicht
- 23: Antireflexionsschicht
- 24a: erste Barriereschicht
- 24b: zweite Barriereschicht
- 24c: dritte Barriereschicht
- 25: haftungsverbessernde Schicht

## Patentansprüche

1. Strahlungsselektive Absorberbeschichtung (20), insbesondere für Absorberrohre (13) von Parabolrinnenkollektoren (10), mit einer im Infrarot-Bereich reflektierenden Schicht (21), mindestens einer über der im Infrarot-Bereich reflektierenden Schicht (21) angeordneten Absorptionsschicht (22) und mit einer über der Absorptionsschicht (22) angeordneten Antireflexionsschicht (23), wobei die im Infrarot-Bereich reflektierende Schicht (21) auf wenigstens zwei Barriereschichten (24a, 24b) angeordnet ist und die erste Barriereschicht (24a) der wenigstens zwei Barriereschichten (24a, 24b) aus einem thermisch erzeugten Oxid besteht, wobei die oberhalb der ersten Barriereschicht (24a) angeordnete zweite Barriereschicht (24b) der wenigstens zwei Barriereschichten (24a, 24b) aus Cermet-material aus wenigstens einem Element aus der Gruppe Aluminiumoxid, Siliciumoxid, Nickeloxid, Chromoxid und wenigstens einem Element aus der Gruppe Molybdän, Nickel, Wolfram, Vanadium besteht **dadurch gekennzeichnet, dass** zwischen der ersten Barriereschicht (24a) und der zweiten Barriereschicht (24b) wenigstens eine haftungsverbessernde Schicht (25) angeordnet ist.

2. Absorberbeschichtung (20) nach Anspruch 1, **dadurch gekennzeichnet, dass** die zweite Barriereschicht (24b) aus Cermetmaterial aus Aluminiumoxid und Molybdän besteht.

3. Absorberbeschichtung (20) nach Anspruch 2, **dadurch gekennzeichnet, dass** die zweite Barriereschicht (24b) einen Molybdän-Füllfaktor von 20% bis 70% aufweist.

4. Absorberbeschichtung (20) nach einem der Ansprüche 1 bis 3 **dadurch gekennzeichnet, dass** die Dicke der zweiten Barriereschicht (24b) 5 nm bis 200 nm beträgt.

5. Absorberbeschichtung (20) nach einem der vorstehenden Ansprüche, **dadurch gekennzeichnet, dass** die haftungsverbessernde Schicht aus Molybdän besteht.

6. Absorberbeschichtung (20) nach einem der Ansprüche 1 bis 5, **dadurch gekennzeichnet, dass** die Absorptionsschicht (22) aus Cermetmaterial besteht.

7. Absorberschichtung (20) nach einem der Ansprüche 1 bis 6, **dadurch gekennzeichnet, dass** die im Infrarot-Bereich reflektierende Schicht (21) Gold, Silber, Platin oder Kupfer aufweist oder aus Gold, Silber, Platin oder Kupfer besteht.

8. Absorberschichtung (20) nach einem der Ansprüche 1 bis 7, **dadurch gekennzeichnet, dass** die Dicke der im Infrarot-Bereich reflektierenden Schicht (21) 50 nm bis 150 nm beträgt.

9. Absorberbeschichtung (20) nach einem der Ansprüche 1 bis 8, **dadurch gekennzeichnet, dass** die erste Barriereschicht (24a) eine Chromeisenoxidschicht ist.

10. Absorberbeschichtung (20) nach einem der Ansprüche 1 bis 9, **dadurch gekennzeichnet, dass** die Absorptionsschicht (22) eine Dicke von 60 nm bis 140 nm aufweist.

11. Absorberrohr (13), insbesondere für Parabol-Rinnen-Kollektoren, mit einem Rohr (1) aus Stahl, auf dessen Außenseite eine strahlungsselektive Absorberbeschichtung (20) gemäß einem der Ansprüche 1 bis 10 derart aufgebracht ist, dass die erste Barriereschicht auf dem Stahlrohr aufgebracht ist.

12. Absorberrohr (13) nach Anspruch 11, **dadurch gekennzeichnet, dass** die zweite Barriereschicht (24b) aus Cermetmaterial aus Aluminiumoxid und Molybdän besteht.

13. Absorberrohr (13) nach Anspruch 12, **dadurch gekennzeichnet, dass** die zweite Barriereschicht (24b) einen Molybdän-Füllfaktor von 20 % bis 70 % aufweist.

14. Absorberrohr (13) nach einem der Ansprüche 11 bis 13, **dadurch gekennzeichnet, dass** die haftungsverbessernde Schicht (25) aus Molybdän besteht.

## Claims

1. Radiation-selective absorber coating (20), in particular for absorber pipes (13) of parabolic trough collectors (10), having a layer (21) which is reflective in the infrared range, having at least one absorption layer (22) which is arranged above the layer (21) which is reflective in the infrared range and having an anti-reflection layer (23) which is arranged above the absorption layer (22), wherein the layer (21) which is reflective in the infrared range (21) is arranged on at least two barrier layers (24a, 24b) and the first barrier layer (24a) of the at least two barrier layers (24a, 24b) comprises a thermally produced oxide, wherein the second barrier layer (24b) of the at least two barrier layers (24a, 24b), which second barrier layer (24b) is arranged above the first barrier layer (24a), comprises cermet material comprising at least one element from the group aluminium oxide, silicon oxide, nickel oxide, chromium oxide and at least one element from the group molybdenum, nickel, tungsten, vanadium, **characterised in that** at least one adhesion-improving layer (25) is arranged between the first barrier layer (24a) and the second barrier layer (24b).

2. Absorber coating (20) according to claim 1, **characterised in that** the second barrier layer (24b) comprises cermet material comprising aluminium oxide and molybdenum.

3. Absorber coating (20) according to claim 2, **characterised in that** the second barrier layer (24b) has a molybdenum filling factor of from 20% to 70%.

4. Absorber coating (20) according to any one of claims 1 to 3, **characterised in that** the thickness of the second barrier layer (24b) is from 5 nm to 200 nm.

5. Absorber coating (20) according to any one of the preceding claims, **characterised in that** the adhesion-improving layer comprises molybdenum.

6. Absorber coating (20) according to any one of claims 1 to 5, **characterised in that** the absorption layer (22) comprises cermet material.

7. Absorber coating (20) according to any one of claims 1 to 6, **characterised in that** the layer (21) which is reflective in the infrared range has gold, silver, platinum or copper or comprises gold, silver, platinum or copper.

8. Absorber coating (20) according to any one of claims 1 to 7, **characterised in that** the thickness of the layer (21) which is reflective in the infrared range is from 50 nm to 150 nm.

9. Absorber coating (20) according to any one of claims 1 to 8, **characterised in that** the first barrier layer (24a) is a chromium/iron oxide layer.

10. Absorber coating (20) according to any one of claims 1 to 9, **characterised in that** the absorption layer (22) has a thickness of from 60 nm to 140 nm.

11. Absorber pipe (13), in particular for parabolic trough collectors, having a pipe (1) of steel, to the outer side of which a radiation-selective absorber coating (20) according to any one of claims 1 to 10 is applied in such a manner that the first barrier layer is applied to the steel pipe.

12. Absorber pipe (13) according to claim 11, **characterised in that** the second barrier layer (24b) comprises cermet material of aluminium oxide and molybdenum.

13. Absorber pipe (13) according to claim 12, **characterised in that** the second barrier layer (24b) has a molybdenum filling factor of from 20% to 70%.

14. Absorber pipe (13) according to any one of claims 11 to 13, **characterised in that** the adhesion-improving layer (25) comprises molybdenum.

## Revendications

1. Revêtement d'absorption à rayonnement sélectif (20), en particulier pour tubes d'absorbeur (13) de collecteurs à canaux paraboliques (10), comportant une couche réfléchissante (21) dans le spectre infrarouge, au moins une couche d'absorption (22) disposée sur la couche réfléchissante dans le spectre infrarouge (21) et une couche antireflet (23) disposée sur la couche d'absorption (22), dans lequel la couche réfléchissante dans le spectre infrarouge (21) est disposée sur au moins deux couches barrières (24a, 24b) et la première couche barrière (24a) des au moins deux couches barrières (24a, 24b) consiste en un oxyde produit thermiquement,
dans lequel la deuxième couche barrière (24b) disposée au-dessus de la première couche barrière (24a) des au moins deux couches barrières (24a, 24b) consiste en matériau cermet d'au moins un élément du groupe comprenant un oxyde d'aluminium, un oxyde de silicium, un oxyde de nickel, un oxyde de chrome et au moins un élément du groupe comprenant le molybdène, le nickel, le tungstène, le vanadium, **caractérisé en ce que**, entre la première couche barrière (24a) et la deuxième couche barrière (24b) est disposée au moins une couche améliorant l'adhérence (25).

2. Revêtement d'absorption (20) selon la revendication 1, **caractérisé en ce que** la deuxième couche barrière (24b) consiste en matériau cermet d'oxyde d'aluminium et de molybdène.

3. Revêtement d'absorption (20) selon la revendication 2, **caractérisé en ce que** la deuxième couche barrière (24b) présente un facteur de charge de molybdène de 20 % à 70 %.

4. Revêtement d'absorption (20) selon l'une des revendications 1 à 3, **caractérisé en ce que** l'épaisseur de la deuxième couche barrière (24b) est de 5 nm à 200 nm.

5. Revêtement d'absorption (20) selon l'une des revendications précédentes, **caractérisé en ce que** la couche améliorant l'adhérence consiste en molybdène.

6. Revêtement d'absorption (20) selon l'une des revendications 1 à 5, **caractérisé en ce que** la couche d'absorption (22) consiste en matériau cermet.

7. Revêtement d'absorption (20) selon l'une des revendications 1 à 6, **caractérisé en ce que** la couche réfléchissante dans le spectre infrarouge (21) présente de l'or, de l'argent, du platine ou du cuivre ou consiste en or, argent, platine ou cuivre.

8. Revêtement d'absorption (20) selon l'une des revendications 1 à 7, **caractérisé en ce que** l'épaisseur de la couche réfléchissante dans le spectre infrarouge (21) est de 50 nm à 150 nm.

9. Revêtement d'absorption (20) selon l'une des revendications 1 à 8, **caractérisé en ce que** la première couche barrière (24a) est une couche d'oxyde de chrome et fer.

10. Revêtement d'absorption (20) selon l'une des revendications 1 à 9, **caractérisé en ce que** la couche d'absorption (22) présente une épaisseur de 60 nm à 140 nm.

11. Tube d'absorbeur (13), en particulier pour des collecteurs à canaux paraboliques, comportant un tube (1) en acier sur l'extérieur duquel est appliqué un revêtement d'absorption à rayonnement sélectif (20) selon l'une des revendications 1 à 10, de telle sorte que la première couche barrière est appliquée sur le tube d'acier.

12. Tube d'absorbeur (13) selon la revendication 11, **caractérisé en ce que** la deuxième couche barrière (24b) consiste en matériau cermet en oxyde d'aluminium et molybdène.

13. Tube d'absorbeur (13) selon la revendication 12, **caractérisé en ce que** la deuxième couche barrière (24b) consiste en un facteur de charge de molybdène de 20 % à 70 %.

14. Tube d'absorbeur (13) selon l'une des revendications 11 à 13, **caractérisé en ce que** la couche améliorant l'adhérence (25) consiste en molybdène.
